# EUROPÄISCHE PATENTSCHRIFT

(11) **EP 1 091 963 B1**
(45) Veröffentlichungstag und Bekanntmachung des Hinweises auf die Patenterteilung: **02.10.2002**
(21) Anmeldenummer: 99926517.6
(22) Anmeldetag: 07.06.1999
(51) Int. Cl.: C07F 5/04, H01G 9/022, H01M 10/36

(54) **LITHIUM-BISOXALATOBORAT, HERSTELLUNG UND VERWENDUNG ALS LEITSALZ**
LITHIUM BISOXALATOBORATE, THE PRODUCTION THEREOF AND ITS USE AS A CONDUCTING SALT
BISOXALATOBORATE DE LITHIUM, SA PREPARATION ET SON UTILISATION COMME SEL CONDUCTEUR

(30) Priorität: 30.06.1998 DE 19829030
(43) Veröffentlichungstag der Anmeldung: 18.04.2001
(73) Patentinhaber: Chemetall GmbH, 60487 Frankfurt am Main (DE)
(72) Erfinder: WIETELMANN, Ulrich, D-61381 Friedrichsdorf (DE); LISCHKA, Uwe, D-60437 Frankfurt am Main (DE); WEGNER, Marion, D-60528 Frankfurt am Main (DE)
(74) Vertreter: Uppena, Franz, Dr.
(86) Internationale Anmeldenummer: EP9903908
(87) Internationale Veröffentlichungsnummer: WO00000495

(56) Entgegenhaltungen:
- DE-A- 19 633 027

## Beschreibung

Gegenstand der Erfindung sind Lithium-bisoxalatoborat, Li[(C₂O₄)₂B], zwei Verfahren zu dessen Herstellung und die Verwendung von Lithium-bisoxalatoborat als Leitsalz in Lithiumionenbatterien.

Derzeit wird in allen kommerziellen Lithiumionenbatterien als Leitsalz Lithiumhexafluorophosphat (LiPF₆) verwendet. Dieses Salz besitzt die notwendigen Voraussetzungen für einen Einsatz in Hochenergiezellen, d.h., es ist in aprotischen Lösungsmitteln gut löslich, es führt zu Elektrolyten mit hohen Leitfähigkeiten, und es weist ein hohes Maß an elektrochemischer Stabilität auf. Oxidative Zersetzung tritt erst bei Potentialen > ca. 4,5 V auf. LiPF₆ hat jedoch auch schwerwiegende Nachteile, die hauptsächlich auf seine mangelnde thermische Stabilität zurückgeführt werden. In Lösung findet eine, wenn auch geringfügige, Dissoziation in LiF und PF₅ statt, was zu einer durch die Lewissäure PF₅ verursachten kationischen Polymerisation des Lösungsmittels führen kann.
Beim Kontakt mit Feuchtigkeit wird ätzender Fluorwasserstoff freigesetzt, der zum einen wegen seiner Giftigkeit und Korrosivität die Handhabung erschwert und zum anderen zur (teilweisen) Auflösung der als Kathodenmaterial eingesetzten Übergangsmetalloxide (z.B. LiMn₂O₄) führen kann. Auf diese Art wird die Zyklenstabilität des betroffenen elektrochemischen Energiespeichers in Mitleidenschaft gezogen.

Vor diesem Hintergrund gibt es intensive Bemühungen mit dem Ziel, alternative Leitsalze zu entwickeln. Als solche werden vor allem Lithiumsalze mit perfluorierten organischen Resten geprüft. Zu nennen sind insbesondere das Lithiumtrifluormethansulfonat, das Lithiumbis(trifluormethansulfonyl)imid sowie die Lithiummethide, deren einfachster Grundkörper Lithiumbis(trifluormethansulfonyl)methid ist. Auch diese Salze weisen Nachteile auf, die ihren Einsatz in kommerziellen Lithiumbatterien bisher verhinderten. Das erstgenannte Salz verleiht den mit ihm hergestellten Elektrolyten keine genügend hohe Leitfähigkeit. Die letztgenannten Salze weisen zwar eine dem LiPF₆ ebenbürtige Leitfähigkeit auf, sie sind jedoch wegen der aufwendigen Herstellverfahren kommerziell uninteressant. Zudem wirkt das Imid korrosiv auf Aluminiumbleche, die in vielen Batteriesystemen als Stromableiter eingesetzt werden. Wegen des hohen Fluorgehalts der Verbindungen sind außerdem unter ungünstigen Bedingungen exotherme Reaktionen mit Lithium zu befürchten.

Als weitere Verbindungsklasse für die Verwendung als Leitsalz wurden Lithiumorganoborate untersucht. Wegen der geringen Oxidationsstabilität, der mit der Bildung von Triorganoboranen verbundenen sicherheitstechnischen Probleme, sowie ihres hohen Preises wurde jedoch ihre Verwendung in Lithiumionenbatterien nicht ernsthaft in Erwägung gezogen.

Einen wesentlichen Fortschritt stellen die in der DE 19633027 A1 beschriebenen Lithiumboratkomplexsalze [(R¹O)₂B(OR²)₂]Li dar. Dabei sind R¹ und R² gleich oder verschieden, R¹ und R² sind gegebenenfalls durch eine Einfach- oder Doppelbindung miteinander verbunden, R¹ und R² haben jeweils einzeln oder gemeinsam die Bedeutung eines aromatischen Rings aus der Gruppe Phenyl, Naphthyl, Anthracenyl oder Phenanthrenyl, der unsubstituiert oder ein- bis vierfach durch A oder Hal substituiert sein kann, wobei Hal für Fluor oder Chlor steht und A Alkyl mit 1 bis 8 C-Atomen, das wiederum ein- bis vierfach halogeniert sein kann, bedeutet.

Nachteilig bei diesen Verbindungen sind zum einen die zwar verbesserten, aber für die geforderten 3 V - Systeme keineswegs ausreichenden Stabilitäten der nichtfluorierten Derivate. So zersetzt sich z.B. das unsubstituierte Lithium-bis[1,2-benzenediolato(2-)-0,0']borat(1-) bereits beim Überschreiten eines anodischen Potentials von 3,6 V. Dieser Wert liegt deutlich unter dem des Standardleitsalzes LiPF₆ (ca. 4,5 V). Durch zunehmende Fluorsubstitution des organischen Restes steigt die Oxidationsstabilität bis zu einem Wert von ca. 4 V für die perfluorierte Verbindung. Diese Werte liegen aber immer noch niedriger als bei dem Standardsalz LiPF₆. Die Stabilität der beschriebenen Borate nimmt allerdings aufgrund einer Deckschichtbildung beim Zyklisieren weiter zu, so daß für einige Verbindungen fast ausreichende Stabilitäten erreicht werden. Die stabilen Verbindungen weisen jedoch hohe Molmassen auf (z.B. 378 g/mol für die perfluorierte Catecholatoverbindung). Auch sind die für die Synthese benötigten Vorstufen nicht kommerziell erhältlich, sondern müssen aufwendig hergestellt werden. Schließlich stellen Verbindungen mit CF-Bindungen ein potentielles Sicherheitsrisiko dar, weil sie thermodynamisch gegenüber metallischem Lithium nicht stabil sind.

Der Erfindung liegt daher die Aufgabe zugrunde, die Nachteile des Standes der Technik zu beseitigen und eine elektrochemisch stabile Lithiumverbindung, die eine gute Löslichkeit in den von der Batterieindustrie eingesetzten aprotischen Lösungsmitteln aufweist, sowie ein Verfahren zu deren Herstellung zu schaffen.

Die Aufgabe wird durch die in Anspruch 1. angegebene Lithiumverbindung Lithium-bisoxalatoborat,
Li[(C₂O₄)₂B], gelöst. Die unabhängigen Ansprüche 2 und 11 geben zwei unterschiedliche Verfahren zur Herstellung von Lithium-bisoxalatoborat an, die Ansprüche 3 bis 10 und 12 bis 13 bilden die Verfahren weiter und der Anspruch 14 gibt eine Verwendung der Verbindung Lithium-bisoxalatoborat an.

Lithium-bis(oxalatoborat) besitzt, obwohl es keine Fluorsubstituenten aufweist, überraschend eine exzellente Oxidationsbeständigkeit. So sind Lösungen dieses Salzes in einem Gemisch aus Ethylencarbonat (EC) und 1/2-Dimethoxyethan (DME) bis zu einer Spannung von 4,6 V stabil.

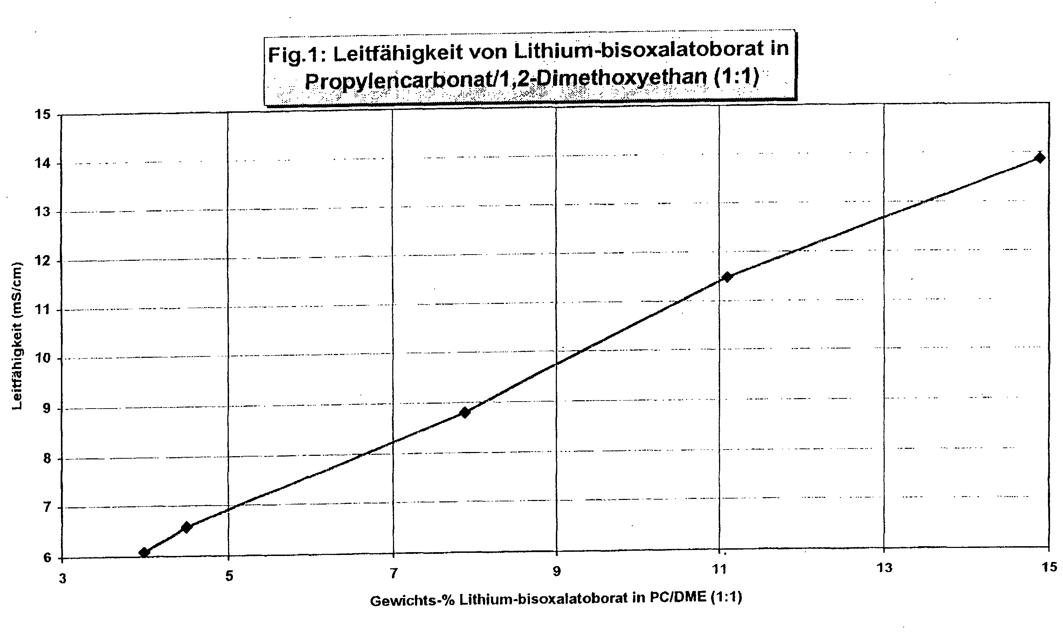

Weiterhin sind die mit dem erfindungsgemäßen Salz erzielbaren Leitfähigkeiten bemerkenswert. So weist eine 0,56 m Lösung im 1:1-Gemisch aus EC und DME bei Raumtemperatur eine Leitfähigkeit von 10,3 mS/cm auf. Im üblichen Lösungsmittelgemisch Propylencarbonat (PC)/DME (1:1) wurde die Leitfähigkeit von Lithium-bisoxalatoborat bei unterschiedlichen Konzentrationen gemessen (Fig. 1). Den Meßergebnissen ist zu entnehmen, daß bei Konzentrationen von bis 15 Gewichts-% Leitfähigkeiten bis zu 14 mS/cm erreicht werden (vgl. Fig. 1). Diese Werte liegen in gleicher Höhe oder sogar über den mit LiPF₆ erzielbaren Leitfähigkeiten. So werden für 1 m Lösungen von LiPF₆ in Dimethylcarbonat (DMC)/EC 11,0 mS/cm erzielt.

Die Molmasse von 193,8 g/mol liegt zwar etwa 27 % über derjenigen des LiPF₆, aber deutlich unter derjenigen der in der DE 19633027 A1 beschriebenen Borate. Dies ist jedoch unproblematisch, da Elektrolyte mit Lithiumbis(oxalatoborat) auch bei niedrigeren Konzentrationen (z.B. ca. 0,5 Mol/l) ausreichend leitfähig sind.

Das Lithium-bis(oxalatoborat) ist in Wasser und in vielen polaren aprotischen Lösungsmitteln gut löslich. In Tetrahydrofuran (THF) lösen sich bei 50 °C ca. 42 Gewichts-% und bei 23 °C ca. 30 Gewichts-%. In DiethylenglykolDimethylether (Diglyme) sowie Mischungen aus Diglyme und Carbonaten besitzt es eine Löslichkeit von mindestens 15 Gewichts-%.

Lithium-bis(oxalatoborat) ist zufolge Thermogravimetrie-Experimenten bis etwa 300°C völlig stabil.

Das erfindungsgemäße Lithium-bis(oxalatoborat) kann hergestellt werden, indem eine Lithiumverbindung, wie Lithiumhydroxid (wasserfrei oder das Hydrat) oder Lithiumcarbonat oder ein Lithiumalkoxid, mit Oxalsäure oder einem Oxalat und einer Borverbindung, wie Boroxid oder Borsäure oder einem Borsäureester, umgesetzt wird.

Die Reaktion kann, muß aber nicht zwingend, in einem Lösungsmittel durchgeführt werden.

Vorzugsweise werden Lithiumhydroxid oder Lithiumcarbonat mit einer stöchiometrischen Menge Oxalsäure und einer stöchiometrischen Menge Borsäure oder Boroxid in Wasser umgesetzt, z.B.:

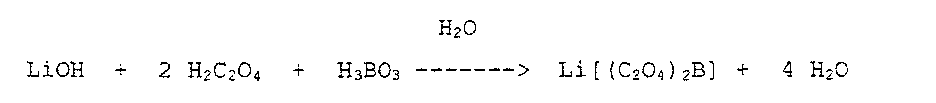

Bevorzugt ist auch die Reaktion von Lithiumoxalat mit Oxalsäure und Borsäure oder Boroxid in Wasser, z.B.:

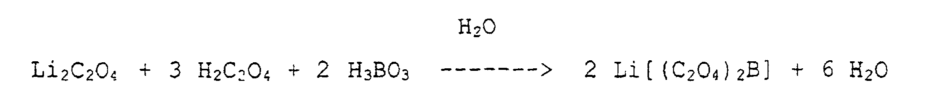

Die Zugabereihenfolge der Komponenten spielt keine bedeutende Rolle. Bevorzugt wird Oxalsäure in wäßriger Lösung vorgelegt und die berechnete Menge Lithiumbase zugegeben, oder Lithiumoxalat wird mit der 3 fachen molaren Menge Oxalsäure gemischt. Zu dieser teilneutralisierten Oxalsäurelösung wird anschließend die berechnete Menge Borsäure oder Boroxid zugegeben.

Die Reaktionstemperatur liegt im Bereich zwischen 0 und 100°C.

Nach Dosierungsende wird einige Zeit auf 50 bis 100°C erwärmt und dann das Wasser abdestilliert. Wenn die Kristallisation einsetzt, wird der Druck langsam erniedrigt. Die Endtrocknung erfolgt unter Rühren bei ca. 50 bis 150°C und < ca. 1 mbar.

Je nach gewähltem Trocknungsaggregat wird ein teils klumpiges, gekörntes oder feinkristallines Festprodukt erhalten.

Bei einer Variante des erfindungsgemäßen Herstellverfahrens wird nicht notwendigerweise Wasser als Lösungsmittel zugegeben. Wasser entsteht jedoch als Reaktionsnebenprodukt in unterschiedlichen Mengen. Nach dieser Verfahrensvariante ist vorgesehen, die Ausgangsstoffe in einem organischen Lösungsmittel zu suspendieren und das bei der Bildungsreaktion freigesetzte Wasser durch Azeotropdestillation zu entfernen. Geeignet für diese Vorgehensweise sind alle Lösungsmittel, die mit Wasser nicht oder begrenzt mischbar sind, die ein Wasser/Lösungsmittelazeotrop bilden und die eine so hohe Flüchtigkeit aufweisen, daß eine anschließende Produkttrocknung möglich ist. Die Reaktion setzt je nach gewählten Temperatur- und Rührbedingungen spontan ein oder wird durch Zugabe kleiner Wassermengen initiiert. Die Reaktionstemperatur der exothermen Reaktion liegt zwischen 0 und 150°C. Das Reaktionsgemisch wird anschließend bis zur Siedetemperatur erhitzt, wobei das Kristall- und Reaktionswasser durch Azeotropdestillation entfernt wird. Besonders geeignet für die Reaktionsführung und die azeotrope Entwässerung sind Aromaten, wie Benzol, Toluol, Xylol und Ethylbenzol. So wird z. B. bei Verwendung von Toluol innerhalb einer Reaktionszeit von ca. 2 bis 4 Stunden die berechnete Wassermenge abgeschieden.

Das erfindungsgemäße Produkt scheidet sich in feinkristalliner, fließfähiger Form völlig wasserfrei und in guter Reinheit ab. Es wird durch Filtration vom Reaktionslösungsmittel abgetrennt, mit einem aprotischen Lösungsmittel (z. B. Toluol oder flüchtigere Kohlenwasserstoffe, wie Hexan oder Pentan) gewaschen und im Vakuum und/oder bei höheren Temperaturen (50 bis 150°C) getrocknet.

Beschränkt geeignet sind auch nicht wassermischbare Ether, wie z. B. 2-Methyltetrahydrofuran. In etherischen Lösungsmitteln bildet sich das Lithium-bisoxalatoborat aber nur in verunreinigter Form, d.h., es muß anschließend durch fraktionierte Kristallisation relativ aufwendig gereinigt werden.

Nach einer weiteren Ausführung des erfindungsgemäßen Verfahrens kann das erfindungsgemäße Produkt auch ausgehend von Lithiumalkoxiden LiOR und Borsäureestern B(OR)₃ (mit R = Methyl, Ethyl) erhalten werden. Dazu wird ein Lithiumalkoxid mit einem Borsäureester gemischt, wobei sich vermutlich das entsprechende Lithiumtetraalkoxyborat Li[B(OR)₄] bildet. Diese Reaktion benötigt nicht notwendigerweise ein Lösungsmittel, kann aber in Gegenwart eines Lösungsmittels durchgeführt werden. Das Reaktionsgemisch wird anschließend mit Oxalsäure umgesetzt und die freigesetzte Alkoholkomponente wird destillativ entfernt. Sinnvollerweise nimmt man für diese Variante solche Borsäureester, die möglichst flüchtige Alkohole freisetzen, d.h. die Methyl- oder Ethylverbindung:

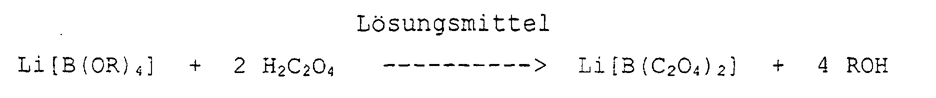

R = Methyl, Ethyl

Als Lösungsmittel kann der Alkohol selbst (also Methanol oder Ethanol) oder ein aprotisches Solvenz, wie Acetonitril, Verwendung finden. Die Reaktionstemperatur beträgt bei dieser Verfahrensvariante 0 bis 100°C, am sinnvollsten ist der Bereich zwischen etwa 20 und 70°C. Bei der Verwendung von Acetonitril fällt das erfindungsgemäße Produkt nach Abdestillieren des freigesetzten Alkohols bei Normal- oder vermindertem Druck beim Abkühlen in Form farbloser Kristalle an, die abfiltriert und durch Waschen mit Acetonitril oder einem anderen flüchtigen, aprotischen Lösungsmittel (z. B. Hexan, Pentan, Diethylether) gereinigt werden können.

Gemäß einer weiteren Verfahrensvariante kann LiBO₂ zugleich als Lithium- und als Borverbindung zusammen mit Oxalsäure zum gewünschten Produkt umgesetzt werden:

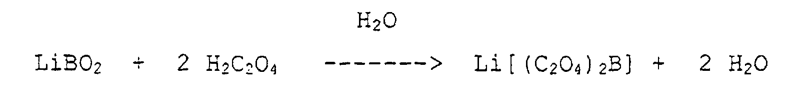

Gemäß einem weiteren erfindungsgemäßen Herstellverfahren läßt sich Lithium-bis(oxalatoborat) auch in aprotischen Medien direkt in völlig wasserfreier Form darstellen. Dazu setzt man Lithlumborhydrid in einem Lösungsmittel gemäß folgender Reaktionsgleichung mit zwei Äquivalenten wasserfreier Oxalsäure um:

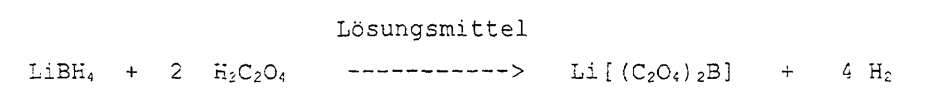

Die Reaktion wird vorteilhaft in einem Lösungsmittel durchgeführt, in welchem LiBH₄ eine gewisse Löslichkeit aufweist, z.B. in Ethern, wie Tetrahydrofuran (THF). Besonders vorteilhaft werden auch solche Lösungsmittel eingesetzt, die von der Batterieindustrie üblicherweise für die Herstellung von Elektrolyten verwendet werden. Besonders sind Polyether, wie 1,2-Dimethoxyethan, geeignet. Die Reaktionstemperatur ist nicht von entscheidender Bedeutung. Nach unten hin wird sie durch die mit sinkender Temperatur steigende Viskosität begrenzt. Auf der anderen Seite sollte sie nicht zu hoch steigen, um einen prinzipiell möglichen reduktiven Angriff des Hydrids auf die Oxalsäure bzw. das Lithium-bis(oxalatoborat) zu vermeiden. Im allgemeinen ist der Temperaturbereich zwischen -20 und 50°C optimal geeignet. Der Reaktionsverlauf kann durch Beobachtung der Gasentwicklung einfach verfolgt werden.

In den folgenden Beispielen wird der Gegenstand der Erfindung näher erläutert.

### Beispiel 1: Synthese von Li[(C₂O₄)₂B] aus Lithiumhydroxid, Oxalsäure und Borsäure in Wasser mit anschließender Totaleindampfung

In 1500 g destilliertem Wasser wurden 252,14 g (2,00 mol) Oxalsäure-Dihydrat und 23,94 g (1,00 mol) calciniertes LiOH gelöst. Durch die Neutralisationswärme stieg die Temperatur auf ca. 30°C, und es bildete sich eine klare Lösung. Innerhalb 15 Minuten wurde dann eine Lösung von 61,83 g (1 mol) Borsäure in 1300 g Wasser zudosiert (keine sichtbare Exothermie). Die Lösung wurde daraufhin bei Normaldruck destillativ aufkonzentriert. Innerhalb ca. 3 Stunden wurden 2165 g Wasser abdestilliert. Die Sumpftemperatur stieg dabei bis auf 104,2°C; aus der farblosen Lösung fielen Kristalle aus. Es wurden noch weitere 450 g Wasser abdestilliert und die zurückbleibende Suspension (411 g) in eine Porzellanschale gegeben und zur vollständigen Eindampfung in einen Vakuumtrockenschrank gestellt. Nach 24-stündiger Vakuumtrockung bei 100°C wurden 184,8 g (95 % Ausbeute) eines farblosen Granulates erhalten.

### Analyse:

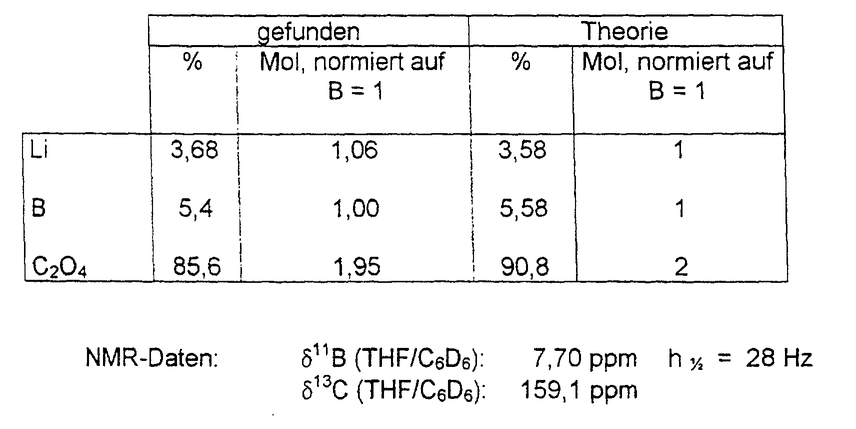

### Beispiel 2: Synthese von Li[(C₂O₄)₂B] aus Lithiumcarbonat, Oxalsäure und Borsäure in Toluol mit anschließender azeotroper Wasserabscheidung

In einen 2 1-Vierhalskolben mit Thermometer, Teflonflügelrührer und Wasserabscheider wurden 126,07 g Oxalsäure-Dihydrat (1,00 mol) und 30,98 g (0,500 mol) 99,8 %ige Borsäure in 600 ml Toluol suspendiert. Nach Aufheizung auf 60°C wurden zunächst etwa 5 g Li₂CO₃ über eine Feststoffdosierbirne zugegeben. Innerhalb einer halben Stunde war keine signifikante Gasentwicklung festzustellen. Daraufhin wurden 3,63 g H₂O mit einer Spritze zugegeben. Nunmehr sprang die Reaktion unter starker Gasentwicklung (2 1 in 5 min) sofort an. Innerhalb von 5 min wurde die restliche Li₂CO₃-Menge (insgesamt 18,50 g 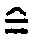 0,250 mol) zugegeben. Es entwickelten sich dabei 6,19 l Gas ( 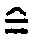 251 mmol, 100 %). Das Reaktionsgemisch wurde dann zum Siedepunkt erhitzt und 4 Stunden refluxiert. Bereits nach 20 min hatten sich 57,3 g Wasser ( 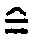 81 % der theoretisch zu erwartenden Menge) abgeschieden. Da der Feststoff stark verbackte, wurde kurz abgekühlt und die Reaktionsmasse mit einem Spatel von der Kolbenwandung abgekratzt. Nach 4-stündigem Refluxieren schied sich kein Wasser mehr ab (insgesamt 72,0 g 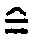 101 % der theoretisch zu erwartenden Menge); die gelbliche Suspension wurde abgekühlt und über eine Glasfritts filtriert. Der cremefarbene, feinkristalline Niederschlag wurde zweimal mit Hexan gewaschen und zunächst bei Raumtemperatur zur Gewichtskonstanz getrocknet (97,4 g 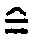 100,5 % der theoretischen Ausbeute). Durch 4-stündiges Vakuumtrocknen bei 90°C wurden 0,2 g Restfeuchte entfernt.

### Analyse:

NMR-Daten: δ¹¹B (THF / C₆D₆): 7,70 ppm

### Beispiel 3: Synthese von Li[(C₂O₄)₂B] aus Lithiumhydroxid, Oxalsäure und Boroxid in Toluol mit anschließender azeotroper Wasserabscheidung

In einem 500-ml-Vierhalskolben mit KPG-Rührer, Wasserabscheider und Thermometer wurden 8,70 g (125 mmol) B₂O₃ (getrocknet bei 300°C in einer Trockenpistole) und 63,04 g (500 mmol) Oxalsäure-Dihydrat in 300 ml Toluol suspendiert. Bei der Zugabe von 10,37 g (250 mmol) LiOH·H₂O stieg die Temperatur spontan auf 39°C. Die azeotrope Wasserabscheidung begann sofort nach Erreichen des Siedepunktes und lieferte binnen 160 Minuten 30,2 g Wasser ( 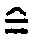 96 % der theoretisch zu erwartenden Menge). Da das Reaktionsprodukt an der Kolbenwandung haftete, wurde zweimal etwas abgekühlt und das Produkt mit einem Spatel abgekratzt.

Ausbeute: 49,9 g beiges Pulver 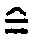 103 % der theoretischen Ausbeute

### Beispiel 4: Synthese von Li[(C₂O₄)₂B] aus Lithiumcarbonat, Oxalsäure und Borsäure in 2-Methyltetrahydrofuran (2-MeTHF) mit anschließender azeotroper Wasserabscheidung

In der gleichen Apparatur wie in Beispiel 2 wurden 252,14 g Oxalsäure-Dihydrat (2,00 mol) und 61,83 g Borsäure (1,00 mol) in ca. 0,8 1 2-MeTHF suspendiert und auf 40 °C erwärmt. Dann wurden 36,95 g (0,50 mol) Li₂CO₃ portionsweise zugegeben. Zur Reaktionbeschleunigung wurden 2 x 1,5 ml Wasser zugespritzt. Die Gasentwicklung erfolgte relativ gleichmäßig und ergab innerhalb 1 Stunde etwa 255 mmol. Daraufhin wurde 13 Stunden refluxiert. Nach 5 Stunden war die theoretisch erwartete Gasmenge entwichen; die Lösung färbte sich intensiv gelb und es schieden sich im Wasserabscheider insgesamt 120,6 g 2-MeTHF-gesättigtes Wasser ab ( 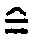 114,2 g reines Wasser 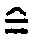 83 % der theoretisch zu erwartenden Menge). Nach 14-stündiger Reaktionszeit wurde die gelbe Suspension abgekühlt und über eine G3-Fritte filtriert.

### Analyse des Filtrats:

Filtrat: 1221 g, intensiv gelb

| | | | |
|---|---|---|---|
| NMR-Daten | δ¹¹B (2-MeTHF/THF) | 20,4 ppm h _{½} = 205 Hz | 24 % |
| | | 7,66 ppm Li[(C₂O₄)₂B] | 65 % |
| | | 5,25 ppm h _{½} = 72 Hz | 11 % |

Anschließend wurde das Produkt vom Lösungsmittel befreit und aus THF/Diethylether kristallisiert.

Ausbeute: 83,3 g 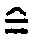 43 % der theoretischen Ausbeute

Analyse des Produkts: Das in THF gelöste Kristallisat zeigt nur noch das ¹¹B-NMR-Signal bei 7,7 ppm.

### Beispiel 5: Synthese von Li[(C₂O₄)₂B] aus Lithiummethoxid, Oxalsäure und Trimethylborat in Methanol

In 119 g Methanol wurden 4,97 g (131 mmol) Lithiummethoxid gelöst und bei 30°C innerhalb 10 min mit einer Lösung von 13,51 g (130 mmol) Trimethylborat in 30 g Methanol versetzt. Die Innentemperatur stieg dabei auf 37 °C; die Reaktionslösung war klar und farblos. Zu dieser Lösung wurden auf einmal 23,40 g (260 mmol) wasserfreie Oxalsäure gegeben. Die Reaktionsmischung wurde daraufhin kurzzeitig (ca. 10 sec) quarkartig, um sich dann in eine wenig viskose, milchartige Suspension zu verwandeln. Es war keine Exothermie festzustellen. Das Reaktionsgemisch wurde 45 min am Rückfluß gekocht (66,6°C) und nach dem Abkühlen von einem äußerst feinverteilten weißen Feststoff dekantiert (der Feststoff ließ sich mit einer G 3-Glasfritte nicht abtrennen). Die Totaleindampfung der klaren dekantierten Lösung am Rotationsverdampfer ergab 23,71 g eines schmierigen Feststoffes. Bei Berücksichtigung der Dekantationsverluste entspricht dies 25,4 g 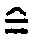 101 % der theoretischen Ausbeute. Im Rotationsverdampfer wurden kleine Mengen eines farblosen Sublimats beobachtet, die kein ¹¹B-NMR-Signal gaben und sich in Wasser mit saurer Reaktion lösten, was auf Oxalsäure hindeutet. Der weiße Trocknungsrückstand war in THF nicht vollständig löslich; der THF-lösliche Anteil zeigte aber nur ein ¹¹B-NMR-Signal bei 7,7 ppm, das vom Li[(C₂O₄)₂B] herrührt. Der Rückstand wurde mit der etwa 6-fachen Menge THF digeriert, filtriert und eingedampft. Beim Eindampfen bildete sich ein schmieriges Produkt, das sich zunehmend dunkel verfärbte. Nach Abtrennung des Lösungsmittels begann ein farbloser Feststoff herauszusublimieren.

Ausbeute (teils ölig): 16,8 g ( 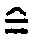 67 % Rohprodukt)

Das Rohprodukt wurde anschließend durch Umkristallisation aus THF/Diethylether gereinigt.

Ausbeute: 10/2 g 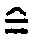 40 % der theoretischen Ausbeute

### Beispiel 6: Synthese von Li[(C₂O₄)₂B] aus LiBH₄ und Oxalsäure in THF

In einem 0,5 1-Doppelmantelreaktor wurden 68,06 g (0,756 mol) bei 120°C während 2 Stunden getrocknete Oxalsäure in 120 g THF gelöst und auf -5 °C gekühlt. Zu dieser Lösung wurde eine Lösung von 8,10 g LiBH₄ (0,372 mol) in 49/2 g THF binnen 70 min dosiert. Dabei entwickelten sich 22,6 l Gas (0,93 mol 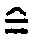 63 % der theoretisch zu erwartenden Menge). Es wurde dann schnell bis zum Siedepunkt erwärmt. Dabei entwichen noch weitere ca. 8 l Gas. Nach 45 min Kochen am Rückfluß (66 °C) wurde auf 24°C abgekühlt, eine Probe entnommen und 3,3 g LiH zugegeben. Es entwickelten sich 2,81 1 Gas ( 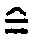 116 mmol). Die Suspension wurde filtriert, wobei 300,3 g klares Filtrat anfielen. Das Filtrat wurde dann am Rotationsverdampfer bis zur Gewichtskonstanz eingedampft. Es wurden 47/6 g (66 % der theoretischen Ausbeute) eines weißen Pulvers erhalten, welches zwecks Reinigung noch umkristallisiert werden muß.

### Analyse:

NMR-Daten:
δ¹¹B (Probe vor LiH-Zugabe): 9,7 ppm (32 %); 7,7 ppm (68 %)
δ¹¹B (Filtrat vor Eindampfung): 9,7 ppm (7 %); 7,7 ppm (88 %); 5,2 ppm (5 %)

## Patentansprüche

1. Lithium-bisoxalatoborat, Li[(C₂O₄)₂B]

2. Verfahren zur Herstellung von Lithium-bisoxalatoborat, Li[(C₂O₄)₂B], **dadurch gekennzeichnet, daß** eine Lithiumverbindung mit
Oxalsäure oder einem Oxalat und mit einer
Borverbindung umgesetzt wird.

3. Verfahren nach Anspruch 2, **dadurch gekennzeichnet, daß** die Reaktion in einem Lösungsmittel durchgeführt wird.

4. Verfahren nach einem der Ansprüche 2 bis 3, **dadurch gekennzeichnet, daß** die Lithiumverbindung LiOH oder LiOH·H₂O oder Li₂CO₃ oder Lithiumoxalat oder LiOR (mit R = Methyl, Ethyl) ist.

5. Verfahren nach einem der Ansprüche 2 bis 4, **dadurch gekennzeichnet, daß** die Borverbindung Boroxid B₂O₃ oder Borsäure H₃BO₃ oder ein Borsäureester B(OR)₃ (mit R = Methyl, Ethyl) ist.

6. Verfahren nach einem der Ansprüche 2 bis 3, **dadurch gekennzeichnet, daß** als Lithium- und Borverbindung LiBO₂ verwendet wird.

7. Verfahren nach einem der Ansprüche 3 bis 5, **dadurch gekennzeichnet, daß** das Lösungsmittel Wasser oder ein Alkohol mit 1 bis 5 C-Atomen oder ein mit Wasser nicht oder begrenzt mischbares organisches Lösungsmittel, das mit Wasser ein Azeotrop bildet, ist.

8. Verfahren nach einem der Ansprüche 3 bis 5 und 7, **dadurch gekennzeichnet, daß** Lithiumhydroxid oder Lithiumcarbonat oder Lithiumoxalat mit Oxalsäure und Borsäure oder Boroxid im Verhältnis Li⁺ : Oxalat : B³⁺ = 1:2:1 und in Gegenwart von Wasser umgesetzt wird.

9. Verfahren nach einem der Ansprüche 3 bis 5 und 7 bis 8, **dadurch gekennzeichnet, daß** Lithiumhydroxid oder Lithiumcarbonat oder Lithiumoxalat mit Oxalsäure und Borsäure oder Boroxid im Verhältnis Li⁺ : Oxalat : B³⁺ = 1:2:1 umgesetzt wird, dem wasserhaltigen Reaktionsgemisch ein organisches Lösungsmittel, das mit Wasser ein Azeotrop bildet, zugesetzt wird und das Wasser azeotrop entfernt wird.

10. Verfahren nach Anspruch 9, **dadurch gekennzeichnet, daß** das organische Lösungsmittel, welches mit Wasser ein Azeotrop bildet, Benzol, Toluol, Xylol oder Ethylbenzol ist.

11. Verfahrer zur Herstellung von Lithium-bisoxalatoborat, Li[(C₂O₄)₂B], **dadurch gekennzeichnet, daß** LiBH₄ mit Oxalsäure in einem aprotischen Lösungsmittel umgesetzt wird.

12. Verfahren nach Anspruch 11, **dadurch gekennzeichnet, daß** das aprotische Lösungsmittel ein Ether oder ein Polyether ist.

13. Verfahren nach Anspruch 12, **dadurch gekennzeichnet, daß** der Ether Tetrahydrofuran (THF) oder der Polyether 1,2-Dimethoxyethan ist.

14. Verwendung von Lithium-bisoxalatoborat, Li[(C₂O₄)₂B], als Leitsalz in Lithiumionenbatterien.

## Claims

1. Lithium-bisoxalatoborate, Li[(C₂O₄)₂B].

2. Method for producing lithium-bisoxalatoborate, Li[(C₂O₄)₂B], **characterised in that** a lithium compound is reacted with oxalic acid or an oxalate and with a boron compound.

3. Method according to claim 2, **characterised in that** the reaction is carried out in a solvent.

4. Method according to one of claims 2 to 3, **characterised in that** the lithium compound is LiOH or LiOH·H₂O or Li₂CO₃ or lithium oxalate or LiOR (with R = methyl, ethyl).

5. Method according to one of claims 2 to 4, **characterised in that** the boron compound is boron oxide B₂O₃ or boric acid H₃BO₃ or a boric acid ester B(OR)₃ (with R = methyl, ethyl).

6. Method according to one of claims 2 to 3, **characterised in that** LiBO₂ is used as the lithium and boron compound.

7. Method according to one of claims 3 to 5, **characterised in that** the solvent is water or an alcohol with 1 to 5 C atoms or an organic solvent which cannot be mixed with water or can be mixed therewith to a limited extent and which forms an azeotrope with water.

8. Method according to one of claims 3 to 5 and 7, **characterised in that** lithium hydroxide or lithium carbonate or lithium oxalate is reacted with oxalic acid and boric acid or boron oxide in the ratio Li⁺: oxalate: B³⁺ = 1:2:1 and in the presence of water.

9. Method according to one of claims 3 to 5 and 7 to 8, **characterised in that** lithium hydroxide or lithium carbonate or lithium oxalate is reacted with oxalic acid and boric acid or boron oxide in the ratio Li⁺: oxalate: B³⁺ = 1:2:1, an organic solvent which forms an azeotrope with water is added to the water-containing reaction mixture and the water is removed azeotropically.

10. Method according to claim 9, **characterised in that** the organic solvent which forms an azeotrope with water is benzene, toluene, xylene or ethyl benzene.

11. Method for producing lithium-bisoxalatoborate, Li[(C₂O₄)₂B], **characterised in that** LiBH₄ is reacted with oxalic acid in an aprotic solvent.

12. Method according to claim 11, **characterised in that** the aprotic solvent is an ether or a polyether.

13. Method according to claim 12, **characterised in that** the ether is tetrahydrofuran (THF) or the polyether is 1,2-dimethoxyethane.

14. Use of lithium-bisoxalatoborate, Li[(C₂O₄)₂B], as a conducting salt in lithium batteries.

## Revendications

1. Bis-oxalatoborate de lithium, Li[(C₂O₄)₂B].

2. Procédé de préparation de bis-oxalatoborate de lithium, Li[(C₂O₄)₂B], **caractérisé par le fait que** l'on fait réagir un composé de lithium avec de l'acide oxalique ou avec un oxalate et avec un composé de bore.

3. Procédé selon la revendication 2, **caractérisé par le fait que** l'on met en oeuvre la réaction dans un solvant.

4. Procédé selon une des revendications 2 à 3, **caractérisé par le fait que** le composé de lithium est du LiOH ou du LiOH.H₂O ou du Li₂CO₃ ou de l'oxalate de lithium ou du LiOR (avec R = méthyle, éthyle).

5. Procédé selon l'une des revendications 2 à 4, **caractérisé par le fait que** le composé de bore est de l'oxyde de bore (B₂O₃) ou de l'acide borique (H₃BO₃) ou un ester d'acide borique (B(OR)₃, avec R = méthyle, éthyle).

6. Procédé selon l'une des revendications 2 à 3, **caractérisé par le fait que** l'on utilise du LiBO₂ en tant que composé de lithium et de bore.

7. Procédé selon l'une des revendications 3 à 5, **caractérisé par le fait que** le solvant est de l'eau ou un alcool en C₁₋₅ ou un solvant organique non miscible ou partiellement miscible à l'eau qui forme avec l'eau un mélange azéotropique.

8. Procédé selon l'une des revendications 3 à 5 et 7, **caractérisé par le fait que** l'on fait réagir l'hydroxyde de lithium ou le carbonate de lithium ou l'oxalate de lithium avec de l'acide oxalique et avec de l'acide borique ou de l'oxyde de bore en un rapport Li⁺:Oxalate:B³⁺ égal à 1:2:1, et en présence d'eau.

9. Procédé selon l'une des revendications 3 à 5 et 7 à 8, **caractérisé par le fait que** l'on fait réagir de l'hydroxyde de lithium ou du carbonate de lithium ou de l'oxalate de lithium avec de l'acide oxalique et de l'acide borique ou de l'oxyde de bore en un rapport Li⁺:Oxalate:B³⁺ égal à 1:2:1, que l'on ajoute au mélange réactionnel aqueux un solvant organique formant avec l'eau un mélange azéotropique, et que l'on élimine l'eau par distillation azéotropique.

10. Procédé selon la revendication 9, **caractérisé par le fait que** le solvant organique formant avec l'eau un mélange azéotropique est le benzène, le toluène, le xylène ou l'éthylbenzène.

11. Procédé de préparation de bis-oxalatoborate de lithium, Li[(C₂O₄)₂B], **caractérisé par le fait que** l'on fait réagir du LiBH₄ avec de l'acide oxalique dans un solvant aprotique.

12. Procédé selon la revendication 11, **caractérisé par le fait que** le solvant aprotique est un éther ou un polyéther.

13. Procédé selon la revendication 12, **caractérisé par le fait que** l'éther est le tétrahydrofurane (THF) ou que le polyéther est le 1,2-diméthoxyéthane.

14. Utilisation de bis-oxalatoborate de lithium, Li[(C₂O₄)₂B], en tant que sel conducteur dans des piles à lithium.
